Europäisches Patentamt

European Patent Office

Office européen des brevets

(11) Numéro de publication: **0 433 512 A1**

# DEMANDE DE BREVET EUROPEEN

(21) Numéro de dépôt: 89403547.6

(51) Int. Cl.⁵: **G01N 19/04**

(22) Date de dépôt: **19.12.89**

(43) Date de publication de la demande:
**26.06.91 Bulletin 91/26**

(84) Etats contractants désignés:
**AT BE CH DE ES GB GR IT LI LU NL SE**

(71) Demandeur: **ASSOCIATION POUR LA RECHERCHE ET LE DEVELOPPEMENT DES METHODES ET PROCESSUS INDUSTRIELS (ARMINES)**
**60, Boulevard Saint-Michel**

**F-75272 Paris Cédex 06(FR)**

(72) Inventeur: **Gilibert, Yvon**
**11 Rue Eugène Delacroix La Neuvillette**
**F-51100 Reims(FR)**

(74) Mandataire: **Bruder, Michel et al**
**Cabinet Michel Bruder Conseil en Brevets**
**10, rue de la Pépinière**
**F-75008 Paris(FR)**

(54) Procédé et appareil d'évaluation ou de mesure des caractéristiques des propriétés d'adhérence d'une couche mince appliquée sur la surface rugueuse d'un substrat ou d'éléments de renforcement d'un corps en matériau composite ou agrégat.

(57) La présente invention concerne un procédé et un appareil d'évaluation ou de mesure des caractéristiques des propriétés d'adhérence d'une couche mince (1) appliquée sur la surface rugueuse d'un substrat (2) ou d'éléments de renforcement d'un corps en matériau composite ou agrégat.

Cet appareil est caractérisé en ce qu'il comprend un plot (3) en matériau déformable, des moyens (4) pour assurer une liaison, permanente ou non permanente, entre le plot (3) en matériau déformable et la couche mince (1), des moyens pour exercer un effort sur le plot (3) en matériau déformable, et des moyens (J1.. Jn,5) pour mesurer les déformations superficielles du plot (3) en matériau déformable, déformations qui dépendent du comportement de la couche mince (1).

Fig.1

La présente invention concerne un procédé et un appareil d'évaluation ou de mesure des caractéristiques des propriétés d'adhérence d'une couche mince appliquée sur la surface rugueuse d'un substrat ou d'éléments de renforcement d'un corps en matériau composite ou agrégat.

Il est important de pouvoir déterminer d'une manière simple des grandeurs susceptibles de caractériser les forces d'adhérence assurant la liaison entre la surface rugueuse d'un substrat et une couche mince adhérant à ce substrat. Une telle couche mince peut être constituée par une couche de peinture, un revêtement quelconque, un composant électronique ou bien encore tout autre corps lié au substrat en mettant en oeuvre des liaisons physiques faibles (forces de Van der Waals) ou des liaisons chimiques fortes (covalentes), ou bien encore une adhérence mécanique, par ancrage, ou du type connu sous le nom de "VELCRO", une liaison magnétique ou une combinaison de ces différents types de liaison.

La présente invention a pour but de fournir un procédé et un appareil très faciles à mettre en oeuvre et qui permettent d'obtenir, d'une manière particulièrement simple, une information précise permettant de caractériser les forces d'adhérence.

A cet effet ce procédé d'évaluation ou de mesure des caractéristiques des propriétés d'adhérence d'une couche mince appliquée sur la surface rugueuse d'un substrat ou d'éléments de renforcement d'un corps en matériau composite ou agrégat est caractérisé en ce qu'on fait adhérer un plot en matériau déformable à la surface de la couche mince ou à une surface du corps, on exerce sur le plot ou sur le corps un effort, et on mesure les déformations superficielles du plot en matériau déformable, déformations permettant de caractériser les propriétés d'adhérence de la couche mince ou des éléments de renforcement.

L'invention a également pour objet un appareil d'évaluation ou de mesure des caractéristiques des propriétés d'adhérence d'une couche mince appliquée sur la surface rugueuse d'un substrat caractérisé en ce qu'il comprend un plot en matériau déformable, des moyens pour assurer une liaison, permanente ou non permanente, entre le plot en matériau déformable et la couche mince ou le corps, des moyens pour exercer un effort sur le plot en matériau déformable ou sur le corps, et des moyens pour mesurer les déformations superficielles du plot en matériau déformable, déformations qui dépendent du comportement de la couche mince ou du corps.

On décrira ci-après, à titre d'exemples non limitatifs, diverses formes d'exécution de la présente invention, en référence au dessin annexé sur lequel :

La figure 1 est une vue en coupe verticale schématique d'un appareil suivant l'invention.

La figure 2 est une vue en coupe verticale schématique illustrant diverses applications de l'appareil suivant l'invention.

La figure 3 est une vue en coupe schématique d'une variante d'exécution d'un appareil de mesure constitué de feuilles souples autocollantes.

La figure 4 est une vue en coupe verticale d'une autre variante d'exécution de l'appareil de mesure.

La figure 5 est une vue en coupe verticale, à plus grande échelle, du plot déformable utilisé dans l'appareil de la figure 4.

La figure 6 est une vue en coupe verticale d'un appareil de mesure complet avec un dispositif permettant d'exercer un effort de traction.

Les figures 7,8 et 9 sont des vues en coupe verticale de diverses variantes d'exécution de l'appareil.

Les figures 10 et 11 sont des vues en coupe verticale de variantes d'exécution d'appareils utilisant un plot en matériau déformable de forme courbe.

La figure 12 est une vue en coupe verticale illustrant l'utilisation de l'appareil suivant l'invention avec un corps en matériau composite ou en agrégat.

Les figures 13 et 14 sont des vues en coupe illustrant des applications de l'appareil suivant l'invention à l'étude du comportement d'une prothèse de hanche implantée.

La figure 15 est une vue en coupe illustrant une application de l'appareil en odontologie.

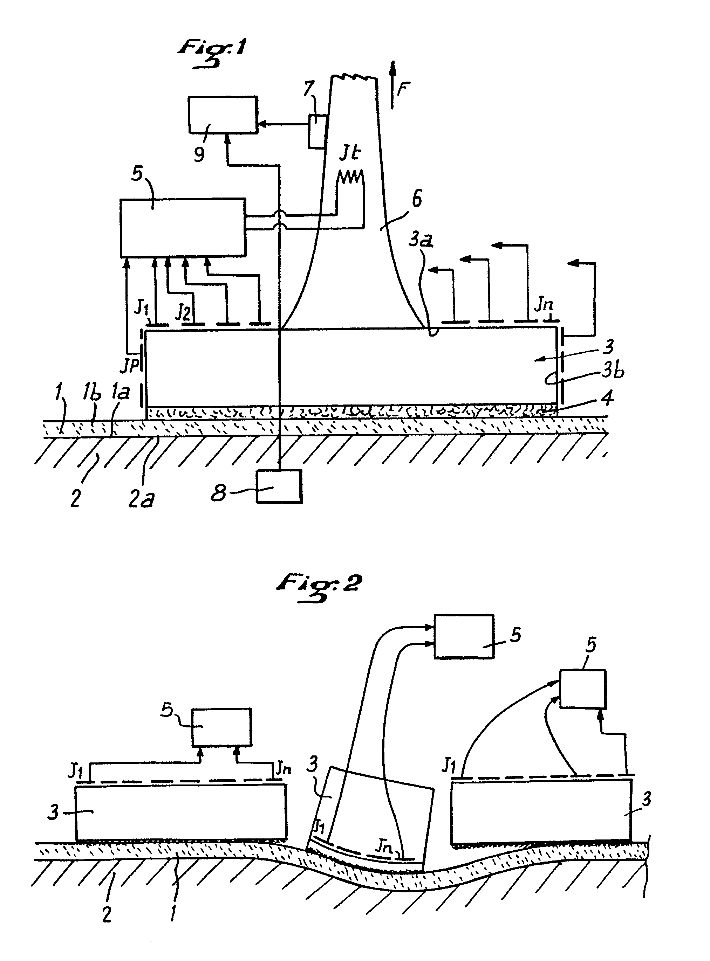

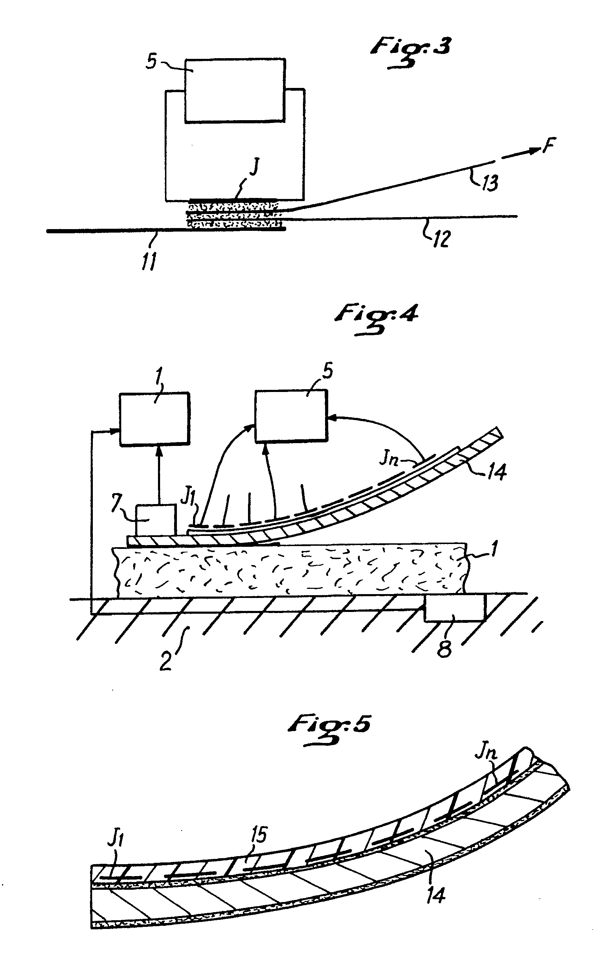

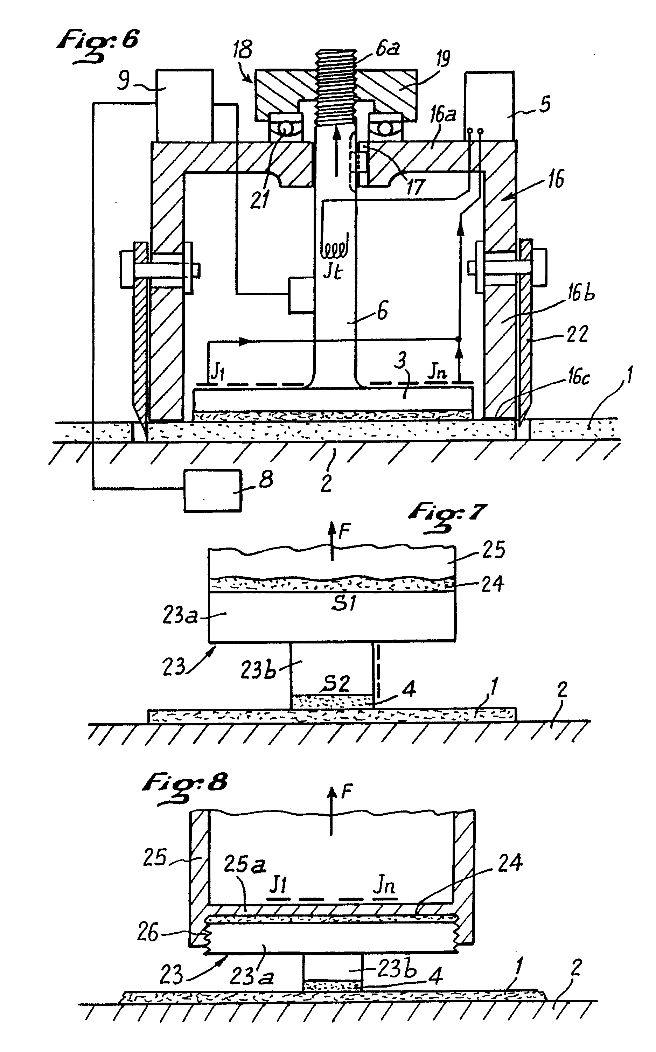

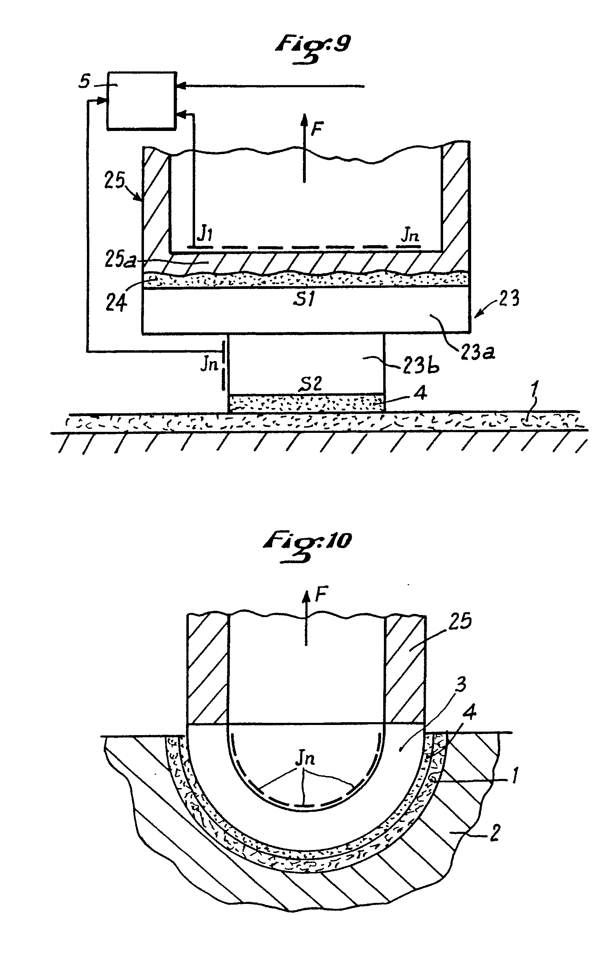

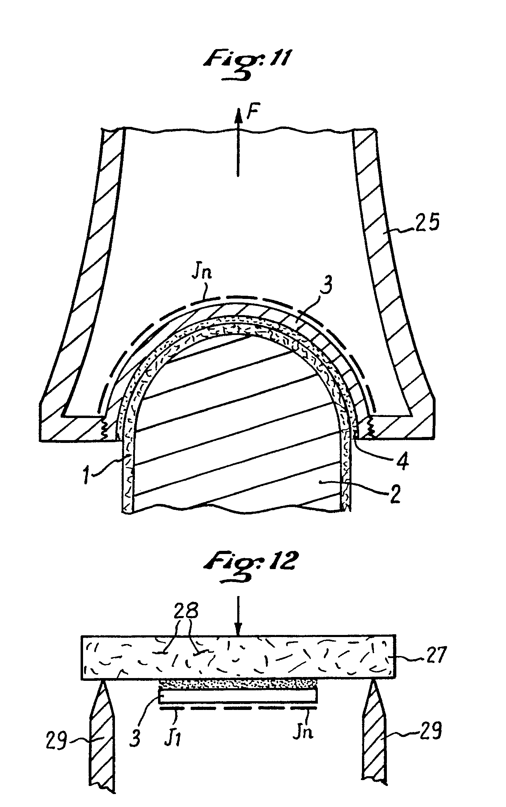

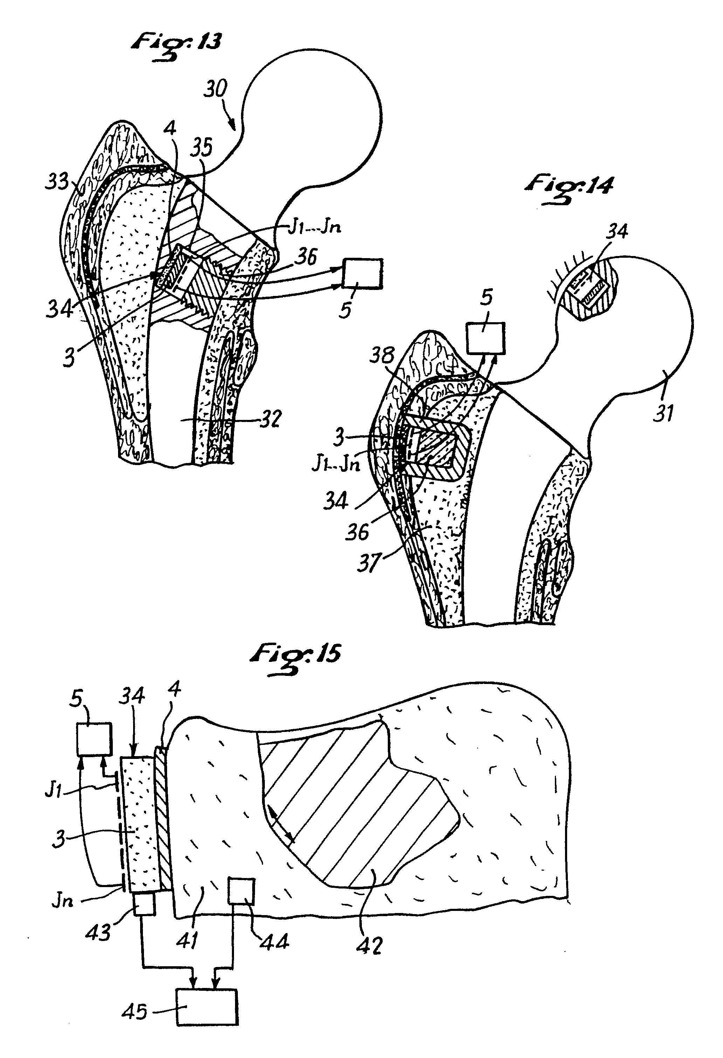

On décrira tout d'abord en se référant à la figure 1, le procédé suivant l'invention, lequel est destiné à évaluer ou mesurer les caractéristiques des propriétés d'adhérence d'un film ou d'une couche mince 1, telle qu'une couche de peinture, qui adhère, par sa face inférieure 1a, à la surface supérieure rugueuse 2a, appelée encore "subjectile", d'un substrat 2. Pour la mise en oeuvre du procédé suivant l'invention on utilise un plot 3 en matériau déformable que l'on fait adhérer à la surface externe 1b de la couche mince 1. Ce plot 3 a une épaisseur constante et il est constitué par un bloc prismatique ou cylindrique. La liaison entre le plot en matériau déformable 3 et la couche mince 1 peut être réalisée au moyen d'un adhésif polymérisant à froid ou à chaud, d'un film adhésif double face autocollant ou d'une manière générale de tout corps ayant une aptitude à se lier à la couche mince 1 et au plot 3. On peut également utiliser, pour assurer la liaison entre le plot en matériau déformable 3 et la couche mince 1, le greffage de radicaux libres ayant une grande affinité, si bien que le collage peut être réalisé au moment du contact ou par catalyse ou par action d'un champ thermique ou magnétique.

Une fois que le plot 3 en matériau déformable a été lié à la couche mince 1, on exerce sur ce plot 3 une force de traction F, orientée verticalement vers le haut sur la figure 1, force qui tend à écarter le plot 3 du substrat 2 et par conséquent à arracher la couche mince 1 de ce substrat 2.

Pour caractériser les propriétés et le comportement de la couche mince 1, on mesure les déformations du plot 3 et à cet effet on peut utiliser une méthode bien connue telle que l'extensométrie, la photoélasticimétrie à laser si le plot 3 est en un matériau transparent ayant des propriétés photoélastiques, le Speckle si l'on veut mesurer les déplacements de surface, la photoélasticimétrie par réflexion, les méthodes laser, l'extensométrie mécanique etc.

Pour la mesure des déformations du plot 3 on utilise de préférence, comme il est représenté sur la figure 1, l'extensométrie qui offre l'avantage de permettre de mesurer non seulement les déformations du plot 3 mais encore l'intensité de la force de traction F. A cet effet on applique sur la surface supérieure libre 3a du plot 3, c'est-à-dire celle qui est située à l'opposé de la face adhérant à la couche mince 1, et éventuellement sur sa surface latérale 3b des jauges d'extensométrie électriques J1,J2...Jn,Jp, lesquelles sont reliées à un appareil d'extensométrie 5.

Une jauge d'extensométrie additionnelle Jt peut être incorporée dans l'élément 6, tel qu'une tige, transmettant la force de traction F au plot 3, afin de mesurer l'intensité de cette force.

On peut également adjoindre des capteurs d'émission acoustique 7,8, reliés à un appareil de mesure d'émission acoustique 9. Le capteur 7 est associé à la tige de transmission d'effort 6 tandis que le capteur 8 est associé au substrat 2. Ces capteurs permettent de déterminer très simplement les valeurs de la force de traction F qui engendrent les premières microfissures.

Ainsi pour mesurer les déformations du plot 3, qui dépendent du comportement de la couche mince 1, on peut utiliser soit uniquement les mesures fournies par les jauges d'extensométrie J1,J2..., soit uniquement les mesures fournies par les capteurs d'émission acoustique 7,8, soit une combinaison de ces mesures.

Le procédé suivant l'invention peut être également utilisé pour étudier le comportement de la couche mince 1 lorsque celle-ci est soumise à une compression. Dans ce cas la couche d'adhésif intermédiaire 4 peut être supprimée et le plot 3 peut être appliqué directement sur la surface supérieure de la couche mince 1. La liaison peut être alors assurée par un ancrage mécanique adhérent, la rugosité de la surface de la couche mince 1 étant alors suffisante pour assurer l'adhérence. Dans ce cas il est possible de tester les propriétés de la couche mince 1 lorsqu'elle est soumise à une compression. Ceci présente un intérêt pour l'étude du comportement de revêtements de sol, de bateaux transportant des liquides, de couches isolantes etc..

Les courbes donnant la variation de l'effort F appliqué en fonction de la déformation superficielle $\epsilon i$ apparaissant permettent de détecter l'apparition des premières microfissures lorsque des changements de pente se produisent. Tout changement d'état tel qu'un passage d'un comportement élastique à un comportement élastoplastique ou à un endommagement par fissurations etc.. libère de l'énergie et la forme de cette énergie caractérise la nature du corps en évolution. Les expériences effectuées sur des structures collées par émission acoustique et extensométrie par jauges électriques ont montré que les déformations de la structure sont liées et bien corrélées à l'émission acoustique. Le procédé et l'appareil suivant l'invention permettent de déterminer l'amorce des premières fissures et de les lier aux déformations superficielles $\epsilon i$. Il en est de même pour les jauges qui sont dans le voisinage où se produisent les phénomènes de fissuration ou de changement d'état. Par ailleurs le spectre acoustique permet de savoir quelle est la partie qui s'endommage et à quel moment le dommage se produit. En effet le spectre acoustique d'une part et les courbes de déformation du plot 3 d'autre part sont différentes suivant que l'amorce de formation de microfissures se produit dans la couche mince 1 ou dans le substrat 2. Par ailleurs le spectre acoustique d'une part et les courbes de déformation du plot 3 d'autre part sont différentes si l'amorce de rupture se produit par décollement local à l'interface entre la couche mince 1 et le substrat 2. En effet le spectre acoustique et les courbes d'extensométrie permettent de différencier les ruptures qui peuvent être du type rupture adhésive ou du type rupture cohésive. Enfin ces deux types de courbes seront différents si les rugosités à l'interface entre la couche mince 1 et le substrat 2 sont différentes et si le traitement physique, physicochimique ou chimique du subjectile 2a du substrat 2 est différent. Il convient de remarquer que le spectre acoustique permet de mesurer une épaisseur précise de la couche mince, laquelle varie en fonction de la rugosité du subjectile 2a à laquelle adhère la couche mince 1, pour une application de volume constant sur le subjectile 1a.

La figure 2 illustre l'utilisation de l'appareil suivant l'invention sur des substrats rigides ou souples, voir même modulables en tout sens à volume constant tels que les caoutchoucs. Dans la partie gauche de la figure 1 le plot 3 est représenté adhérant d'une manière permanente à un substrat 2 rigide alors que dans la partie centrale de cette figure il est appliqué sur un substrat 2 souple, en adhérant d'une manière non permanente, et que dans la partie droite de la figure 2 il est appliqué sur un support rigide 2 en adhérant également d'une manière non permanente.

La figure 3 illustre une forme d'exécution particulièrement simple de l'appareil de mesure dans lequel le plot 3 est remplacé par un ensemble de trois feuilles souples 11,12,13 du type autocollant à adhérence non permanente, par exemple celles connues sous la marque "Post-it". Ces feuilles sont des feuilles de papier que l'on peut coller et décoller à volonté sur tous les supports à condition qu'ils ne soient pas souillés. Les trois feuilles 11,12,13 sont assemblées entre elles par leurs parties autocollantes et la feuille supérieure 13 porte, sur sa partie encollée, une jauge d'extensométrie J reliée à l'appareil de mesure extensométrique 5. La feuille supérieure 13 peut être tirée dans des directions différentes comme il est illustré par la flèche F.

Les figures 4 et 5 illustrent une feuille 14 en matériau souple, autocollante sur ses deux faces et qui peut être appliquée et collée, par sa face inférieure, sur la couche mince 1. Ce collage peut être permanent ou non permanent et dans ce dernier cas l'ensemble de l'appareil peut être récupéré aisément par pelage pour être réutilisé en un autre endroit de la couche mince 2. La feuille souple 14 porte sur sa face supérieure les jauges d'extensométrie J1..Jn qui adhèrent par collage. Ces jauges peuvent être protégées par une couche de vernis protecteur 15, comme il est représenté sur la figure 5, ou par un film autocollant amovible ou non.

La figure 6 représente une forme d'exécution de l'ensemble d'un appareil comportant des moyens permettant d'exercer un effort de traction sur le plot 3. L'ensemble de l'appareil comprend un bâti support 16 en forme de cloche comportant un fond horizontal supérieur 16a et une jupe périphérique cylindrique 16b s'étendant vers le bas et qui est mise en contact, par sa face frontale annulaire inférieure 16c, avec la surface de la couche mince 1. Cette face d'appui 16c est de préférence antidérapante, par exemple adhésive, striée etc... Le plot 3 est logé à l'intérieur du bâti support 16 et sa tige 6 s'étend verticalement vers le haut en traversant un trou central 17 percé dans le fond supérieur 16a du bâti 16. Au-dessus du fond 16a est prévu un dispositif 18 qui est accouplé à la partie extrême supérieure de la tige 6 pour exercer sur cette tige un effort de traction vers le haut. Dans cette forme d'exécution le dispositif 18 exerçant l'effort de traction comporte un écrou 19 qui est vissé sur la partie extrême filetée 6a de la tige 6 du plot 3 et qui prend appui, à sa partie inférieure, sur une butée à billes sphérique 21 portée par la face supérieure du fond 16a. L'écrou 19 a un faible pas pour permettre des déplacements micrométriques. Le dispositif 18 permet, en vissant plus ou moins l'écrou 19 sur le filetage 6a, d'exercer, sur le plot 3, un effort de traction F plus ou moins intense vers le haut, comme il est indiqué par la flèche, si bien que l'écrou 19 est plaqué vers le bas sur la butée sphérique 21.

L'appareil représenté sur la figure 6 est pourvu également d'un couteau 22 qui est porté par la partie inférieure de la jupe 16b du bâti 16, à l'extérieur de celle-ci comme il est représenté sur la figure 6 ou bien encore à l'intérieur. Ce couteau 22 est destiné à découper la couche mince 1 sur toute son épaisseur de manière à délimiter une rondelle sur laquelle est effectué l'essai d'adhérence. Le couteau 22 est monté mobile à rotation sur le bâti 16 autour de l'axe vertical de celui-ci, pour assurer ce découpage. Il peut être indépendant de l'appareil de test proprement dit et constituer un appareil de découpe autonome, à pénétration guidée, en ayant une stabilité assurée sur la structure. Le couteau 22 doit pouvoir s'adapter à des surfaces quelconques, convexes ou concaves, et à cet effet il peut être constitué par une lame en matériau composite souple et déformable, à dents ou lisse.

Suivant une variante, si le bâti 16 a une forme prismatique, l'appareil peut comporter autant de couteaux qu'il comprend de faces latérales, chaque couteau étant alors mobile parallèlement à la face latérale sur laquelle il est monté. Un tel appareil permet alors de découper, dans la couche mince 1, une plaquette à contour polygonal.

Suivant une variante on peut remplacer le système vis 6a-écrou 19 par un vérin hydraulique ou pneumatique dont la tige est accouplée à la tige 6 du plot 3 et dont le corps prend appui sur le fond supérieur 16a du bâti 16.

Dans les variantes d'exécution représentées sur les figures 7,8 et 9 l'appareil suivant l'invention comporte un plot 23 étagé qui comprend une partie supérieure 23a de grande surface S1 laquelle est prolongée par une partie inférieure centrale 23b de plus petite surface S2 qui adhère à la couche mince 1 par l'intermédiaire de l'adhésif ou de la couche de colle 4 assurant un collage permanent. De ce fait le plot 23 peut être laissé en place en permanence et pour l'essai on fait adhérer à la face supérieure de sa partie supérieure 23a, par l'intermédiaire d'une couche de liaison à faible résistance 24, la face inférieure d'une tige 25 transmettant un effort de traction F vers le haut. Du fait du rapport entre les surfaces S1 et S2 on peut avoir des forces d'adhérence faibles au niveau de la surface S1 (surface supérieure de la partie supérieure 23a du plot 23), pour pouvoir transmettre l'effort F nécessaire pour provoquer le décollement de la couche mince 1 par rapport au substrat 2, ou bien encore la ruine de la couche mince 1 ou la ruine du substrat 2.

La figure 8 représente un appareil mettant en oeuvre le principe illustré sur la figure 7 et dans ce cas la tige 25 est tubulaire et elle présente, à son extrémité inférieure, un filetage interne 26 par lequel elle est vissée sur un filetage prévu sur la surface latérale de la partie supérieure 23a du plot 23. La tige 25 comporte également un fond d'épaisseur mince 25a légèrement en retrait et qui porte sur sa face supérieure les jauges d'extensométrie J1..Jn. Le plot 23 est également collé, par la face supérieure de sa partie supérieure 23a, au fond 25a de la tige 25 au moyen d'un adhésif non permanent 24. Le filetage 26 assure l'ancrage de la tige 25 sur le plot 23 et il permet de transmettre l'effort de traction F à ce plot 23. Par ailleurs le film adhésif 24 transmet les déformations du plot 23 au fond mince 25a de la tige 25, déformations qui dépendent de l'adhérence de la couche mince 1 sur le substrat 2 et qui sont mesurées par les jauges J1..Jn.

On peut prévoir éventuellement des jauges d'extensométrie sur la surface latérale de la partie inférieure 23b, de petite surface S2, du plot 23, comme il est représenté sur la figure 7, si la couche adhésive 4 assure une liaison faible, comme cela est le cas des emballages papier, de matières plastiques, de vêtements et chaussures en cuir, de tissus, de liaisons du type "VELCRO" etc..

Dans la variante de réalisation représentée sur la figure 9 la tige tubulaire 25 est fermée, à son extrémité inférieure, par un fond transversal mince 25a qui adhère à la surface supérieure de la partie supérieure 23a du plot 23, au moyen de la couche adhésive 24. De ce fait la liaison entre la tige 25 par laquelle est exercé l'effort de traction F, et le plot 23 est assurée uniquement par la couche adhésive 24. Les jauges d'extensométrie J1..Jn sont portées par la face interne du fond 25a de la tige 25 et elles permettent d'analyser à distance ce qui se passe dans la couche d'adhésif 4 entre la partie inférieure 23b du plot 23 et la couche mince 1.

Bien que dans toutes les formes d'exécution précédentes l'appareil suivant l'invention ait été représenté comme s'appliquant sur une surface plane, il va de soi qu'il peut s'appliquer sur des surfaces concaves ou convexes comme il est représenté sur ces figures 10 et 11. Dans ce cas le plot 3 en matériau déformable a une forme correspondante concave ou convexe.

La figure 12 illustre une application de l'appareil suivant l'invention à l'évaluation des caractéristiques des propriétés d'adhérence interne d'un corps 27 en matériau composite ou agrégat comportant, en son sein, des éléments de renforcement tels que des fibres 28 en contact avec un matériau constituant la matrice. L'appareil comporte également dans ce cas un plot en matériau déformable 3 qui est avantageusement constitué par un tampon élastique du type caoutchouc. Ce plot 3 est collé, par exemple, à la face inférieure du corps 27 reposant sur deux appuis 29 et qui est soumis à un effort vertical F s'exerçant de haut en bas sur sa face supérieure. Le tampon élastique 3 porte sur sa face inférieure les jauges d'extensométrie J1...Jn et la mesure des déformations superficielles du tampon élastique 3 permet de caractériser, comme dans les cas précédents, les propriétés d'adhérence des éléments de renforcement 28 à l'intérieur de la matrice du corps 27. On pourrait également utiliser, dans cette application, un plot étagé analogue au plot 23 représenté sur la figure 7, ce plot 23 étant collé à demeure.

L'appareil suivant l'invention peut s'appliquer dans beaucoup d'autres domaines et notamment il peut être implanté dans des prothèses artificielles comme il est représenté sur les figures 13 et 14. Ces figures représentent une prothèse de hanche 30 qui comporte une rotule 31 et une queue fémorale 32 engagée dans la tête d'un fémur 33. L'appareil 34 suivant l'invention est implanté dans la partie supérieure de la queue fémorale 32, dans le fond d'un trou borgne 35 obturé au moyen d'un bouchon 36 vissé et collé. L'appareil 34 comporte, comme dans les cas illustrés précédemment, un plot en matériau déformable 3 qui est fixé dans le fond du trou borgne 35 au moyen d'une couche de colle 4. Ce plot déformable 3 porte, sur sa face libre, les jauges J1...Jn reliées à l'appareil d'extensométrie externe 5. Les jauges d'extensométrie J1...Jn peuvent être éventuellement remplacées par un système de télémesure si l'on ne désire pas avoir des fils sortant de la prothèse. L'appareil 34 ainsi implanté permet de mesurer les déformations locales de la prothèse de hanche 31 qui travaille en flexion sous l'effet du poids du corps humain.

Il va de soi que l'appareil suivant l'invention 34 peut être adapté à n'importe quel type de prothèse et qu'il peut être mis en place dans n'importe quelle partie d'une prothèse.

La figure 14 illustre une variante d'application dans laquelle l'appareil 34 est implanté dans l'os, en l'occurrence dans la tête de fémur 33. L'appareil est maintenu par la couche d'adhésif compatible 4 liant le plot en matériau déformable 3 et par le bouchon 36 qui est logé dans le ciment de colmatage 37. L'ensemble de l'appareil 34 et du bouchon 36 peut être avantageusement entouré d'un joint souple protecteur 38. La figure 14 illustre également la mise en place possible d'un appareil 34 dans la rotule 31 de la prothèse 30.

L'appareil 34 peut être aussi implanté dans un os malade avant l'opération, afin de déterminer des efforts et des déformations rééelles de différentes parties de la tête du fémur 34 par exemple. On peut l'implanter pour mesurer les actions de la partie mâle de la prothèse sur la partie femelle de celle-ci ou réciproquement.

La figure 15 illustre une application de l'appareil suivant l'invention dans le domaine de l'odontologie. A cet effet on utilise un appareil miniaturisé 34 qui est destiné à mesurer l'effet de cisaillement, présent ou non, entre une dent 41 et une masse de ciment 42 colmatant une carie. L'appareil 34 est collé sur la dent 41, au moyen d'un adhésif biface 4 compatible avec l'ivoire de la dent, l'appareil 34 comportant, comme précédemment, un plot 3 en matériau déformable portant des jauges d'extensométrie J1...Jn reliées à un appareil d'extensométrie 5. Ce montage permet à un dentiste de savoir s'il se produit des cisaillements entre la dent 41 et la masse de ciment 42. Le ciment en se rétractant agit sur la dent et provoque une déformation de l'adhésif 4 fixant le plot déformable 3 portant les jauges. Cet appareil peut permettre aussi d'adapter la rugosité de la cavité et par conséquent les meules au ciment, d'étudier la composition du ciment et de l'adapter à chaque patient. Un dentiste disposant de plusieurs ciments peut réaliser rapidement des interventions, le cas échéant, dans un temps limité, du fait que les ciments durcissent vite. Si un ciment n'est pas adapté à un patient déterminé, il pourra alors en essayer un autre et juger de son adhérence sur la dent.

A l'appareil 34 peuvent être ajoutés des microcapteurs acoustiques 43,44 reliés à un appareil de mesure d'émission accoustique 45. Le capteur 43 est fixé sur le plot déformable 3 tandis que le capteur 44 est fixé sur la dent 41 au moyen d'un adhésif compatible servant de liant entre la dent et le microcapteur 44.

L'appareil permet ainsi d'essayer différents ciments et de juger leur comportement in situ par comparaison des courbes des déformations ou d'émission acoustique (en prévoyant alors des minicapteurs d'émission acoustique installés entre deux dents voisines).

Le procédé et l'appareil suivant l'invention peuvent être utilisés dans des domaines très divers et notamment pour l'étude du comportement de skis ou de tout autre structure composite continue. L'appareil peut être notamment implanté sur des skis avec une sortie de fils ou télémesure, pour mesurer le comportement des peaux ou de n'importe quelle partie composite délicate à tester in situ pendant le travail du ski.

**Revendications**

1.- Procédé d'évaluation ou de mesure des caractéristiques des propriétés d'adhérence d'une couche mince (1) appliquée sur la surface rugueuse d'un substrat (2) ou d'éléments de renforcement (28) d'un corps (27) en matériau composite ou agrégat, caractérisé en ce qu'on fait adhérer un plot (3) à un matériau déformable à la surface de la couche mince (1) ou à une surface du corps (27), on exerce sur le plot (3) ou sur le corps (27) un effort, et on mesure les déformations superficielles du plot (3) en matériau déformable, déformations permettant de caractériser les propriétés d'adhérence de la couche mince (1) ou des éléments de renforcement (28) du corps (27).

2.- Appareil d'évaluation ou de mesure des caractéristiques des propriétés d'adhérence d'une couche mince (1) appliquée sur la surface rugueuse d'un substrat (2) ou d'éléments de renforcement (28) d'un corps (27) en matériau composite ou agrégat, caractérisé en ce qu'il comprend un plot (3) en matériau déformable, des moyens (4) pour assurer une liaison, permanente ou non permanente, entre le plot (3) en matériau déformable et la couche mince (1) ou le corps (27), des moyens pour exercer un effort sur le plot (3) en matériau déformable ou sur le corps (27), et des moyens (J1.. Jn,5) pour mesurer les déformations superficielles du plot (3) en matériau déformable, déformations qui dépendent du comportement de la couche mince (1) ou du corps (27).

3.- Appareil suivant la revendication 2 caractérisé en ce que le plot (3) en matériau déformable, porte, sur sa surface, des jauges d'extensométrie électriques (J1,J2...Jn,Jp), lesquelles sont reliées à un appareil d'extensométrie (5).

4.- Appareil suivant la revendication 3 caractérisé en ce qu'une jauge d'extensométrie additionnelle (Jt) est incorporée dans un élément (6), tel qu'une tige, transmettant la force (F) au plot (3), afin de mesurer l'intensité de cette force.

5.- Appareil suivant l'une quelconque des revendications 3 et 4 caractérisé en ce que des capteurs d'émission acoustique (7,8), reliés à un appareil de mesure d'émission acoustique (9) l'un des capteurs (7) étant associé à la tige de transmission d'effort (6) tandis que l'autre capteur (8) est associé au substrat (2).

6.- Appareil suivant la revendication 3 caractérisé en ce que le plot en matériau déformable est constitué par des feuilles souples (11,12,13) du type autocollant à adhérence non permanente, qui sont assemblées entre elles par leurs parties autocollantes, une feuille (13) portant, sur sa partie encollée, une jauge d'extensométrie (J) reliée à l'appareil de mesure extensométrique (5).

7.- Appareil suivant la revendication 3 caractérisé en ce que le plot en matériau déformable est constitué par une feuille (14) en matériau souple, autocollante sur ses deux faces et qui peut être appliquée et collée, par l'une de ses faces, sur la couche mince (1), et la feuille souple (14) porte sur son autre face les jauges d'extensométrie (J1..Jn) qui adhérent par collage.

8.- Appareil suivant la revendication 7 caractérisé en ce que les jauges peuvent être protégées par une couche de vernis protecteur (15) ou par un film autocollant amovible ou non.

9.- Appareil suivant la revendication 3 caractérisé en ce qu'il comprend un bâti support (16) en forme de cloche comportant un fond horizontal supérieur (16a) et une jupe périphérique cylindrique (16b) s'étendant vers le bas et qui est mise en contact, par sa face frontale annulaire inférieure (16c), avec la surface de la couche mince (1), cette face d'appui (16c) étant de préférence antidérapante, par exemple adhésive, striée etc, le plot (3) en matériau déformable est logé à l'intérieur du bâti support (16) et sa tige (6) s'étend verticalement vers le haut en traversant un trou central (17) percé dans le fond supérieur (16a) du bâti (16) et au-dessus du fond (16a) est prévu un dispositif (18) qui est accouplé à la partie extrême supérieure de la tige (6) pour exercer sur cette tige un effort de traction vers le haut.

10.- Appareil suivant la revendication 9 caractérisé en que le dispositif (18) exerçant l'effort de traction comporte un écrou (19) qui est vissé sur la partie extrême filetée (6a) de la tige (6) du plot (3) en matériau déformable et qui prend appui, à sa partie inférieure, sur une butée à billes sphérique (21) portée par la face supérieure du fond (16a).

11.- Appareil suivant la revendication 9 caractérisé en ce que le dispositif exerçant un effort sur la tige (6) du plot (3) en matériau déformable comprend un vérin hydraulique ou pneumatique dont la tige est accouplée à la tige (6) du plot (3) et dont le corps prend appui sur le fond supérieur (16a) du bâti (16).

12.- Appareil suivant l'une quelconque des revendications 9 à 11 caractérisé en ce qu'il est pourvu d'un couteau (22) qui est porté par la partie inférieure de la jupe (16b) du bâti (16), à l'extérieur de celle-ci ou bien encore à l'intérieur, et ce couteau (22) qui est destiné à découper la couche mince (1) sur toute son épaisseur de manière à délimiter une rondelle sur laquelle est effectué l'essai d'adhérence, est monté mobile à rotation sur le bâti (16) autour de l'axe vertical de celui-ci, pour assurer ce découpage.

13.- Appareil suivant la revendication 2 caractérisé en ce qu'il comporte un plot en matériau déformable étagé (23) qui comprend une partie (23a) de grande surface (S1) laquelle est prolongée par une partie centrale (23b) de plus petite surface (S2) qui adhère à la couche mince (1) par l'intermédiaire de l'adhésif ou de la couche de colle (4) assurant un collage permanent.

14.- Appareil suivant la revendication 13 caractérisé en ce que pour l'essai on fait adhérer à la face libre de la partie (23a) de grande surface (S1) du plot (23), par l'intermédiaire d'une couche de liaison à faible résistance (24), la face frontale d'une tige (25) transmettant un effort de traction (F) sur le plot (23).

15.- Appareil suivant la revendication 14 caractérisé en ce que la tige (25) est tubulaire et elle présente, à son extrémité, un filetage interne (26) par lequel elle est vissée sur un filetage prévu sur la surface latérale de la partie (23a) de grande surface (S1) du plot (23), et la tige (25) comporte également un fond d'épaisseur mince (25a) légèrement en retrait et qui porte les jauges d'extensométrie (J1..Jn,) et le plot (23) est collé, au fond (25a) de la tige (25) au moyen d'un adhésif non permanent (24).

16.- Appareil suivant l'une quelconque des revendications 13 à 15 caractérisé en ce que des jauges d'extensométrie sont prévues sur la surface latérale de la partie (23b) de petite surface (S2) du plot (23).

17.- Appareil suivant la revendication 14 caractérisé en ce que la tige tubulaire (25) est fermée, à son extrémité, par un fond transversal mince (25a) qui adhère à la partie (23a) de grande surface (S1) du plot (23), au moyen de la couche adhésive (24) si bien que la liaison entre la tige (25) par laquelle est exercée l'effort de traction, et le plot (23) est assurée uniquement par la couche adhésive (24) et les jauges d'extensométrie (J1..Jn) sont portées par la face interne du fond (25a) de la tige (25).

*Fig. 1*

*Fig. 2*

Fig.3

Fig.4

Fig.5

*Fig: 6*

*Fig: 7*

*Fig: 8*

**Fig.9**

**Fig.10**

## Fig.11

## Fig.12

Fig.13

Fig.14

Fig.15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | JOURNAL OF VACUUM SCIENCE & TECHNOLOGY A, vol. 4, no. 6, série 2, novembre-décembre 1986, pages 3007-3014, American Vacuum Society, Woodbury, NY, US; J. VALLI: "A review of adhesion test methods for thin hard coatings" * En entier * | 1,2 | G 01 N 19/04 |
| A | GB-A-1 179 149 (ELECOMETER INSTRUMENTS LTD) * En entier * | 1,2 | |
| A | FR-A-2 570 826 (CENTRE EXPERIMENTAL DE RECHERCHES ET D'ETUDES DU BATIMENT ET DES TRAVAUX PUBLICS) * Page 3, ligne 16 - page 15, ligne 7; figures 1-8b * | 1,2 | |

DOMAINES TECHNIQUES
RECHERCHES (Int. Cl.5)

G 01 N 19/00

Le présent rapport a été établi pour toutes les revendications

| Lieu de la recherche | Date d'achèvement de la recherche | Examinateur |
|---|---|---|
| LA HAYE | 04-04-1990 | SARNEEL A.P.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)